# EUROPÄISCHE PATENTSCHRIFT

(11) **EP 2 300 958 B1**
(45) Veröffentlichungstag und Bekanntmachung des Hinweises auf die Patenterteilung: **20.03.2019**
(21) Anmeldenummer: 09780305.0
(22) Anmeldetag: 08.07.2009
(51) Int. Cl.: H04L 9/32, G06F 21/64, H04L 29/06

(54) **VERFAHREN UND COMPUTERSYSTEM ZUR LANGZEITARCHIVIERUNG VON QUALIFIZIERT SIGNIERTEN DATEN**
METHOD AND COMPUTER SYSTEM FOR LONG-TERM ARCHIVING OF QUALIFIED SIGNED DATA
PROCÉDÉ ET SYSTÈME INFORMATIQUE POUR L'ARCHIVAGE À LONG TERME DE DONNÉES SIGNÉES

(30) Priorität: 08.07.2008 DE 102008031890
(43) Veröffentlichungstag der Anmeldung: 30.03.2011
(73) Patentinhaber: Artec Computer GmbH, 61184 Karben (DE)
(72) Erfinder: HETT, Christian, 61194 Niddatal (DE); ARTISHDAD, Jerry John, Karben 61184 (DE)
(74) Vertreter: Meyer-Dulheuer, Karl-Hermann
(86) Internationale Anmeldenummer: PCT/EP2009/058657
(87) Internationale Veröffentlichungsnummer: WO 2010/003975

(56) Entgegenhaltungen:
- WO-A-2006/010347
- WO-A-2007/072468
- WO-A-2008/061389
- WO-A2-02/33886
- GB-A- 2 385 440
- US-A1- 2007 038 857
- US-B1- 6 188 766
- "Chapter 9: ED - MENEZES A; OORSCHOT VAN P; VANSTONE S" HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, [Online] 1. Oktober 1996 (1996-10-01), Seiten 321-383, XP001525009 ISBN: 978-0-8493-8523-0 Gefunden im Internet: URL:http://www.cacr.math.uwaterloo.ca/hac/ >
- JERMAN BLAZIC ET AL: "Long-term trusted preservation service using service interaction protocol and evidence records" COMPUTER STANDARDS AND INTERFACES, ELSEVIER SEQUOIA. LAUSANNE, CH, Bd. 29, Nr. 3, 2. Februar 2007 (2007-02-02), Seiten 398-412, XP005871193 ISSN: 0920-5489

## Beschreibung

Die Erfindung betrifft ein Verfahren zur Langzeitarchivierung von Daten, die zur Beweisfähigkeitssicherung qualifiziert signiert werden, sowie ein Computersystem zur Durchführung dieses Verfahrens. Das erfindungsgemäße Verfahren gestaltet die Archivierung derart, dass die Rechtsgültigkeit der Daten durch Erneuerung der Signaturen über eine längere Zeitdauer erhalten bleibt.

Mit dem Voranschreiten des "papierlosen Büros" und dem immer häufiger auftretenden Umstand, dass Dokumente, für die im geschäftlichen oder auch privaten Umfeld eine rechtliche Aufbewahrungsfrist von 30 Jahren und mehr besteht, nicht mehr oder nicht mehr ausschließlich in gedruckter Form vorliegen, sondern in Form von elektronischen Daten, besteht ein immer größerer Bedarf an einer rechtssicheren Archivierungsmöglichkeit der anfallenden Daten. Da Dokumente in der elektronischen Form leicht veränderbar sind, muss durch Maßnahmen sichergestellt werden, dass sich die archivierten Daten im Originalzustand befinden.

Daran, dass solche Dokumente gerichtsverwertbare Beweise darstellen, hat der Gesetzgeber strenge Auflagen geknüpft. Mit dem Signaturgesetz (SigG) und der Signaturverordnung (SigV) hat der deutsche Gesetzgeber die Richtlinie 1999/93/EG ("Signaturrichtlinie") der europäischen Union umgesetzt, die die Verwendung elektronischer Signaturen regelt. Demgemäß gilt ein mit einer qualifizierten elektronischen Signatur versehenes elektronisches Dokument als der Schriftform gleichgestellt. Die qualifizierte elektronische Signatur hat weitestgehend die gleiche Rechtswirkung wie die handschriftliche Unterschrift. Somit lassen sich auf diese Weise signierte Dokumente wie z. B. Emails oder elektronische Rechnungen vor Gericht wie ihre Gegenstücke auf Papier als Beweise einsetzen.

Im Gegensatz zu den Papierdokumenten mit Unterschrift verlieren elektronische Signaturen jedoch nach gewisser Zeit ihre Rechtsgültigkeit. Zur Erzeugung der Signaturen werden Kryptographiealgorithmen verwendet, die bedingt durch die fortschreitende Computerentwicklung und die damit einhergehende immer besser werdende Kryptoanalyse nur eine begrenzte Zeit als fälschungssicher gelten.

Im Allgemeinen wird aus dem zu signierenden Dokument ein so genannter Hashwert mittels einer Hashfunktion berechnet, die sich dadurch auszeichnet, dass sie eine Art digitalen Fingerabdruck des betreffenden Dokuments darstellt, wobei die Funktion eine Einwegeigenschaft und Kollisionsresistenz aufweist. Dies bedeutet, dass aus einem beliebig großen Dokument ein kleiner Wert definierter Länge berechnet wird, der Rückschlüsse auf Änderungen am Dokument erlaubt, da zwei unterschiedliche Dokumente immer deutlich unterschiedliche Hashwerte liefern (Kollisionsresistenz) und aus dem Hashwert nicht das Ursprungsdokument rückberechnet werden kann (Einwegeigenschaft). Anschließend wird der so erhaltene Hashwert mit einem geheimen privaten Schlüssel verschlüsselt, mit einem Zeitstempel der aktuellen Zeit verknüpft und mit der Signatur des Zeitstempeldienstes versehen. Zur Archivierung der Dateien können die Signaturdateien entweder getrennt von der Originaldatei aufbewahrt oder an diese angehängt werden. Eine weitere Möglichkeit stellt der Einsatz von Containerdateien (beispielsweise PKCS#7, etc.) dar, die sowohl das Original als auch die Signaturdatei und evtl. weitere Informationen zur Signatur beinhalten. Wird es nach einer gewissen Zeit nun durch gestiegene Rechenleistung oder neue mathematische Erkenntnisse möglich, die verwendeten Hash- und/oder Kryptographiealgorithmen zu durchbrechen, könnte die signierte Datei nachträglich manipuliert werden. Daher wird für derartige Algorithmen eine Gültigkeitsdauer durch die Regulierungsbehörde für Telekommunikation und Post (RegTP) festgelegt.

Um die Rechtsgültigkeit archivierten Daten sicher zu stellen, muss die in der Signaturverordnung verankerte zeitliche Begrenzung der Algorithmen durch geeignete Maßnahmen verlängert werden, wobei die Signaturverordnung entsprechende Maßnahmen selber vorgibt. Demnach sind "die Daten vor dem Zeitpunkt des Ablaufs der Eignung der Algorithmen oder der zugehörigen Parameter mit einer neuen qualifizierten elektronischen Signatur zu versehen. Diese muss mit geeigneten neuen Algorithmen oder zugehörigen Parametern erfolgen, frühere Signaturen einschließen und einen qualifizierten Zeitstempel tragen".

Für den Anwender ergibt sich dadurch das Problem, dass er einerseits die Gültigkeit der Signaturen überwachen muss und andererseits gegebenenfalls eine neue Signatur einholen muss. Da nach dem Signaturgesetz und der Signaturverordnung an die Ausstellung von qualifizierten elektronischen Signaturen sicherheitstechnische Mindeststandards für die Rechenzentren geknüpft sind und entsprechende Anbieter nur nach genauer Prüfung zugelassen werden, handelt es sich bei den qualifizierten Signaturdienstanbietern durchweg um kostenpflichtige Dienste. Jede eingeholte qualifizierte Signatur stellt somit einen Kostenfaktor dar. Sollen beispielsweise in einer Firma sämtliche Emails archiviert werden, kommen wirtschaftlich relevante Beträge zusammen.

Aus dem Stand der Technik sind Verfahren zur Erzeugung von Hashwerten und Hashtrees und zur Erstellung von Zeitstempeln hinlänglich bekannt. Aus den Kosten für einen qualifizierten Zeitstempel, der alleine die Rechtsgültigkeit der Daten sicherstellt, ergibt sich bei einem hohen täglichen Aufkommen an zu sichernden Daten, wie beispielsweise Emails, elektronischen Rechnungen, Faxen, Druckdateien usw. ein immenser Kostenaufwand.

Die DE 10 2006 025 369 B4 beschreibt ein Verfahren und eine Vorrichtung zur Sicherung der Integrität und/oder Nichtabstreitbarkeit von paketbasierter, zeitkritischer Kommunikation. Dabei werden zur Anwendung technischer digitaler Sicherungsmethoden jeweils eine festlegbare Anzahl an Paketen zu einem Intervall zusammengefasst und die Intervalle miteinander verkettet. Die angewendeten technischen digitalen Sicherungsmethoden können auch die Anbringung einer elektronischen Signatur oder eines elektronischen Zeitstempels umfassen.

Das Dokument WO2008061389A1 beschreibt ein Verfahren zum Dokumentenmanagement für eine revisionssichere Archivierung, in dem in einem ersten Schritt a) ausgehend von einem ersten digitalen Dokument eine erste Datenmenge erzeugt wird, welche einen Hashwert des digitalen Dokuments und einen internen Zeitstempel enthält, und diese Datenmenge dann in einem weiteren Schritt b) als Journaleintrag journalisiert wird, und die Schritte a) bis b) für mindestens ein weiteres Dokument wiederholt werden und dadurch eine Journaldatei mit mindestens zwei Journaleinträgen gebildet wird, und die Journaldatei nach vorgegebenen Beendigungs-Kriterien und Übermitteln des Hashwerts des Journals oder des Hashwerts eines öffentlichen Schlüssels, mit denen die Journaleinträge signiert sind, an ein zertifiziertes Zeitstempel-Unternehmen abgeschlossen wird, und von dem Zeitstempel-Unternehmen eine Zeitstempel-Signatur, welche über den Hashwert des Journals oder über den Hashwert des öffentlichen Schlüssels und über einen zertifizierten Zeitstempel vom Zeitstempel-Unternehmen und verschlüsselt mit einem Schlüssel des Zeitstempel-Unternehmens errechnet wird, empfangen wird, und das Journal sowie dessen Zeitstempel-Signatur in einem Repositorium gespeichert werden. Das Dokument beschreibt auch eine Vorrichtung zur Ausführung dieses Verfahrens, welche einen Server zur Erstellung von Zeitstempel und/oder Zeitstempel-Signaturen für jedes zu speichernde Dokument, eine Journalisierungseinheit zur Erfassung von Zeitstempel und/oder Zeitstempel-Signaturen zu einer einheitlichen Journaldatei und eine Kommunikationsverbindung zu einem zertifizierten Zeitstempel-Unternehmen umfasst.

Das Dokument "Long-term trusted preservation service using service interaction protocol and evidence records" aus der Zeitschrift Computer Standards & Interfaces, Band 29, Seiten 398-412 (2007) des Verlages ScienceDirect beschreibt ein Verfahren zur Archivierung von Daten (Trusted Archive Services TAS) mit einer langfristigen Signierungsfunktion, welches aus den Schritten der Signierung von zu archivierenden Daten (evidence record generation) und der Kryptographierung der signierten Daten besteht (evidence record maintenance), wobei die Signatur durch das standardisierte Verfahren des Long-term-Archiving and Notary Service (IETF LTANS WG) vorgenommen wird und dabei zur Kryptographierung auf die Systeme der Public-Key-Infrastruktur zurückgegriffen wird. Das Dokument beschreibt auch ein Computersystem, welches die Bausteine eines oder mehrerer Computerendgeräte (clients), eines Archivierungsnetzwerkes (Long-term Archive Protocol) mit einer Schnittstelle zu den Endgeräten, einer Datenverwaltung (data management) mit einem Massenspeichermedium (data storage), einer Datenerkennung (data validation), einer Signierung (evidence record generation and management) und optional einer Dateninterpretation (data interpretation) zur Aufrechterhaltung der Daten bei einer Veränderung des Datenumfeldes wie beispielsweise einer Datenmigration umfasst.

Das Dokument WO0233886A2 beschreibt ein Verfahren zur gesicherten Übertragung von Daten unter Verwendung eines Gerätes zur Datenverarbeitung (COM), welches mit einer von dem Gerät physikalisch getrennt ausgebildeten Speichereinrichtung (ARC) über zumindest eine Datenleitung (DAT) verbindbar ist, über welche zwischen dem Gerät zur Datenverarbeitung und der Speichereinrichtung Daten austauschbar sind, wobei in einem Schritt a) mit dem Gerät zur Datenverarbeitung (COM) auf dem Gerät oder einem dem Gerät zugeordneten Speicher zumindest zwischengespeicherte Daten (dat) mit einer digitalen Signatur (has*) versehen werden, und in einem weiteren Schritt b) zumindest die Daten (dat) verschlüsselt werden, und in einem weiteren Schritt c) die verschlüsselten Daten (dat) sowie die digitale Signatur (has*) mit einer Transportverschlüsselung (ssl) versehen werden und so über die Datenleitung (DAT) an die Speichereinrichtung (ARC) übertragbar sind. In einer Ausführungsform des Verfahrens werden in Schritt b) die digitale Signatur (has*) gemeinsam mit den Daten (dat) verschlüsselt und in Schritt c) die mit den Daten verschlüsselte Signatur (has*) sowie die verschlüsselten Daten (dat*) mit der Transportverschlüsselung versehen. Das Dokument beschreibt auch ein Gerät zur Durchführung dieses Verfahrens.

Die technische Aufgabe der vorliegenden Erfindung ist die Bereitstellung einer Vorrichtung und eines Verfahrens zur rechtssicheren Archivierung von elektronischen Daten, die den Umfang der einzuholenden qualifizierten Zeitstempel und damit die Kosten des Verfahrens gegenüber den Standardverfahren signifikant reduzieren.

Gelöst wird die Aufgabe durch das erfindungsgemäße Verfahren (Anspruch 1) zur Langzeitarchivierung von qualifiziert signierten Daten, das folgende Verfahrensschritte beinhaltet:
- Hashen der Daten,
- Verschlüsselung der Daten mittels eines Kryptographiealgorithmuses,
- Hashen der verschlüsselten Daten,
- Signieren der gehashten Daten mit einem fortgeschrittenen Zeitstempel am Ende eines vorgewählten Zeitintervalls, wobei die Signatur sowohl einen Hashwert der Originaldatei als auch einen Hashwert der verschlüsselten Archivdatei beinhaltet,
- Erzeugung eines Hashtrees über den gesamten Datenbestand oder Untergruppen davon,
- Signierung des oder der Hashtrees mittels eines qualifizierten Zeitstempels, durch den der fortgeschrittene Zeitstempel durch einen qualifizierten Zeitstempel bestätigt wird, wodurch in dem vorgewählten Zeitintervall nur ein kostenpflichtiger Zeitstempel erforderlich ist, wobei zur Erzeugung der Signaturen Kryptographiealgorithmen verwendet werden;
- automatische Zuführung der zu archivierenden Daten dem Archiv ohne weitere Benutzeraktion;
wobei das Verfahren auf einem Computersystem ausgeführt wird, das nachfolgende Merkmale beinhaltet:
- eine und/oder mehrere Schnittstellen zur Verbindung mit je einem Server zur Ausstellung von fortgeschrittenen und/oder qualifizierten Signaturen und Zeitstempeln;
- eine Kryptographievorrichtung;
- ein und/oder mehrere Massenspeichermedien;
- eine und/oder mehrere geeignete Schnittstellen zu dem Datenstrom der zu archivierenden Daten, die derart ausgeführt ist/sind, dass eine automatische Archivierung erfolgen kann.

Die grundlegende Idee hinter der Erfindung ist, die Anzahl der benötigten qualifizierten Zeitstempel dadurch zu reduzieren, dass sie in einem bestimmten Zeitintervall durch fortgeschrittene Zeitstempel ersetzt werden, die dann für das vorgewählte Zeitintervall durch einen qualifizierten Zeitstempel bestätigt werden. So kann z. B. während eines Tages die Stempelung aller Daten mit kostenfreien fortgeschrittenen Zeitstempeln erfolgen, die am Ende des Tages dann gemeinsam mit einem qualifizierten Zeitstempel bestätigt werden; dadurch ist täglich nur ein kostenpflichtiger Stempel erforderlich.

Da die fortgeschrittenen Zeitstempel in einem Hashtree zusammengefasst mit dem qualifizierten Zeitstempel signiert werden, ist das Tagesdatum mit hoher Beweiskraft für diese gestempelten Daten gesichert. Die Uhrzeit der fortgeschrittenen Stempel erfüllt nicht die hohen Anforderungen an die Rechtssicherheit im Sinn des Signaturgesetzes (SigG) oder der Signaturverordnung (SigV), da die Stempel jedoch zusätzlich noch mit dem qualifizierten Stempel versehen werden, wird ihnen in der Regel auch eine höhere Beweiskraft als nur den ausschließlich fortgeschrittenen Zeitstempeln zugebilligt werden.

Zudem kommt es bei den meisten Rechtsfragen nur auf ein gesichertes Datum an, nicht jedoch auf eine genaue Uhrzeit.

Im Einzelnen sieht das erfindungsgemäße Verfahren folgendermaßen aus. Zunächst werden die Daten mittels einer Hashfunktion gehasht. In einer bevorzugten Ausführungsvariante werden dabei gleich mehrere Hashwerte mit einer Auswahl von mehr als einem, bevorzugt 2-10, besonders bevorzugt 5-7 Hashalgorithmen erzeugt. Diese Hashalgorithmen sind so ausgewählt, dass sie noch für eine möglichst lange Zeit als sicher eingestuft werden können. Auf diese Weise werden Hashwerte quasi auf Vorrat erstellt, so dass im Falle einer späteren Einstufung des zur Signatur verwendeten Hashalgorithmuses als unsicher nicht auf die archivierten Daten zurückgegriffen werden muss, sondern aus den bevorrateten Hashwerten einfach der nächste gültige benutzt werden kann. Im Idealfall lassen sich damit die gesamten für die Aufbewahrungszeit benötigten Stempel aus dem Hashwertvorrat bedienen ohne nochmals die Originaldaten bearbeiten zu müssen.

Anschließend wird der Hashwert mit einem fortgeschrittenen Zeitstempel signiert. Dies kann entweder im Archivsystem selbst erfolgen, das dann mit einer entsprechenden Vorrichtung mit interner Uhr, einer Verbindung zu einer externen Referenzzeit (beispielsweise einem Empfänger für das DCF77 Signal) und entsprechender Signatursoftware ausgestattet ist, oder über einen externen Zeitstempelserver, wobei der Zugang zu diesem Server sowohl über ein LAN als auch über ein WAN erfolgen kann. Aus den so erhaltenen Hashwerten werden Hashtrees gebildet. Die Bäume können sich dabei über den gesamten Archivbestand erstrecken oder nur über Teilmengen davon, besonders bevorzugt über die jeweils im Intervall hinzugekommenen neuen Daten.

In einer Ausführungsform der Erfindung erfolgt zur Aufrechterhaltung der Rechtsgültigkeit der Signatur einer oder mehrerer Dateien eine Neusignierung des oder der Hashtrees durch eine qualifizierte Signatur.

In einer weiteren Ausführungsform der Erfindung erfolgt die Erzeugung des Hashtrees in regelmäßigen zeitlichen Intervallen, insbesondere täglich, über den gesamten Datenbestand.

In einer weiteren Ausführungsform der Erfindung erfolgt die Erzeugung des Hashtrees in regelmäßigen zeitlichen Intervallen, insbesondere täglich, über den neu hinzugekommenen Datenbestand.

In einer weiteren Ausführungsform der Erfindung sind die zu archivierenden Daten Emails und die fortgeschrittene Signatur wird jeweils über die gesamte Email erzeugt.

In einer weiteren Ausführungsform der Erfindung sind die zu archivierenden Daten Emails und die fortgeschrittene Signatur wird jeweils nur über den Body der Email inklusive etwa vorhandener Anhänge jedoch ohne den Header erzeugt.

In einer vorteilhaften Ausgestaltung der Erfindung wird die Anforderung der qualifizierten Signatur durch den Server für mehrere Archivclients gebündelt, sodass nur ein Stempel für alle Clients zusammen erforderlich ist, was die Kosten nochmals vermindert. In einer weiteren vorteilhaften Variante werden die signierten Hashtreedateien genauso im Archiv abgelegt, wie die archivierten Daten, also z. B. als Pseudo-Emails. Dadurch ist es leicht möglich, die Hashtreedaten bei Bedarf neu zu signieren, indem sie einfach mit in die Tagesdaten eingehasht werden.

In einer besonders bevorzugten Ausführungsvariante werden die Hashtree Daten in einer Binärdatei gesammelt, was eine einfache und schnelle Navigation in den Daten z. B. durch mathematische Operationen ermöglicht (feste Bitlänge der Einträge). Am Ende des vorgewählten Zeitintervalls erfolgt die Signierung des gebildeten Hashtrees mittels eines qualifizierten Zeitstempels. Die Anfrage hierzu kann an den qualifizierten Signaturdienstanbieter durch das Archivsystem selbst erfolgen oder aber durch den Server, der auch für die Ausstellung der fortgeschrittenen Signatur zuständig ist.

In einer weiteren Ausführungsform der Erfindung wird der binäre Hashtree zusammen mit dem eingeholten qualifizierten Zeitstempel so im Archiv abgelegt wie die zu archivierenden Daten.

In einer weiteren Ausführungsform der Erfindung werden die Werte der Hashtrees in einer Datenbank gesammelt.

In einer weiteren Ausführungsform der Erfindung werden die Daten parallel in einem Durchlauf mit mehr als einem Hashalgorithmus gehasht und die so erzeugten Hashwerte zusammen mit den gestempelten Daten und einem Verweis auf den zur Stempelung verwendeten Algorithmus abgelegt.

In einer weiteren Ausführungsform der Erfindung geschieht die Anforderung der qualifizierten Zeitstempel für mehrere Archivclients durch einen gemeinsamen Zeitstempelserver derart, dass die zur Stempelung übergebenen Hashwerte innerhalb eines regelmäßigen Zeitfensters durch den gemeinsamen Zeitstempelserver gesammelt und nach Ende des Zeitfensters verknüpft werden, was vorzugsweise über einen Hashbaum geschieht, danach an einen qualifizierten Zeitstempeldienst zur Stempelung übergeben werden und den Archivclients beim nächsten Kontakt eine Datenstruktur, die mit einem qualifizierten Zeitstempel versehen ist und den übergebenen Hashwert umfasst, zurückgegeben wird.

In einer weiteren vorteilhaften Ausführungsvariante werden die Signaturen durch das Archivsystem auf Gültigkeit überwacht und rechtzeitig vor Ablauf erneut zur Signierung geschickt. Besonders bevorzugt ist eine Variante, bei der die Daten mit Hilfe eines Kryptographiealgorithmuses verschlüsselt werden. Somit ist es nicht möglich, unbefugt Einblick in die archivierten Daten zu nehmen. Damit kann zur Lagerung der Archivdaten ohne Sicherheitsbedenken ein webbasierter Speicherservice genutzt werden. Die dazu vorgesehene Kryptographieeinrichtung an dem Computersystem ist derart ausgestaltet, dass eine Dechiffrierung des Archivs nur auf dem jeweils zur Chiffrierung benutzten Computersystem möglich ist. Auf diese Weise kann ausgeschlossen werden, dass ein baugleiches Computersystem zur Dechiffrierung von entwendeten Archivdaten verwendet werden kann.

Werden die Daten verschlüsselt im Archiv abgelegt, so erfolgt die fortgeschrittene Signatur in einer weiteren bevorzugten Ausgestaltungsvariante derart, dass sie sowohl den Hashwert der unverschlüsselten Originaldatei als auch den Hashwert der verschlüsselten Archivdatei beinhaltet. Dadurch ist es möglich, die Unversehrtheit der Daten zu überprüfen auch ohne Zugriff auf die Kryptographiefunktion des Archivcomputersystems zu haben.

Um den Anforderungen des Signaturgesetzes und der Signaturverordnung hinsichtlich der Sorgfaltspflichten bei der Archivierung zu genügen, erfolgt durch das Archivcomputersystem in weiteren bevorzugten Ausführungsvarianten die Erstellung eines Logfiles, in dem sämtliche Archivzugriffe durch den Administrator aufgezeichnet werden, sowie eine manuell und/oder in festgelegten Intervallen automatisch ausgelöste Konsistenzprüfung aller archivierten Dokumente mit Erzeugung eines Berichts. Sowohl die Logfiles als auch die Berichtsdateien werden ebenfalls signiert und wie die Daten selbst im Archiv abgelegt (also z. B. als Pseudoemail). Dadurch kann ein Administrator nachweisen, dass er regelmäßig seiner Sorgfaltspflicht Genüge getan und sein Archiv auf Datenverlust geprüft hat.

Das Archivverfahren ist für jedwede Art von Dateien einsetzbar. Denkbar sind Archive für Emails, die automatisch bei Ein- oder Ausgang in das Archiv aufgenommen werden können, Filearchive, die als Backuplösung funktionieren und dabei diverse Bearbeitungszustände von Dateien dokumentieren können, Dokumentenarchive, die eine elektronische Aktenablage aus erstellten Text- und/oder Bilddokumenten darstellen und neben den Dokumentdateien beispielsweise auch aus den zu einem Drucker gesandten Daten erstellt werden können. Ferner sind Faxarchive oder Dokumentarchive aus gescannten Papiervorlagen möglich. In einer bevorzugten Ausführungsform der Erfindung werden die Archivdaten in einer durchsuchbaren Form im Archiv abgelegt. Dazu erfolgt - ggf. nach Umwandlung von Bilddateien per OCR in Textdateien - eine Verschlagwortung und Ablage in einer Datenbankstruktur. Der Zugriff sowohl auf die administrativen und operativen Archivfunktionen als auch auf die archivierten Daten selbst erfolgt besonders bevorzugt über eine sichere Verbindung (SSL) zu einem Web-Service, der auf dem Archivcomputersystem läuft. Dabei sind sowohl der Zugang aus einem LAN heraus als auch über das Internet möglich. Durch den Einsatz einer Benutzeroberfläche im Webbrowser kann der Zugriff auf das Archiv ohne zusätzliche Softwareinstallation und unabhängig von dem eingesetzten Betriebssystem der Clients erfolgen.

Beansprucht wird auch ein Computersystem (Anspruch 12) zur Langzeitarchivierung von qualifiziert signierten Daten, welches dadurch gekennzeichnet ist, dass das Computersystem nachfolgende Merkmale beinhaltet:
- eine und/oder mehrere Schnittstellen zur Verbindung mit je einem Server zur Ausstellung von fortgeschrittenen und/oder qualifizierten Signaturen und Zeitstempeln;
- eine Kryptographievorrichtung;
- ein und/oder mehrere Massenspeichermedien;
- eine und/oder mehrere geeignete Schnittstellen zu dem Datenstrom der zu archivierenden Daten, die derart ausgeführt ist/sind, dass eine automatische Archivierung erfolgen kann;
und eingerichtet ist, die Verfahrensschritte
- Hashen der Daten;
- Verschlüsselung der Daten mittels eines Kryptographiealgorithmuses;
- Hashen der verschlüsselten Daten;
- Signieren der gehashten Daten mit einem fortgeschrittenen Zeitstempel am Ende eines vorgewählten Zeitintervalls, wobei die Signatur sowohl einen Hashwert der Originaldatei als auch einen Hashwert der verschlüsselten Archivdatei beinhaltet;
- Erzeugung eines Hashtrees über den gesamten Datenbestand oder Untergruppen davon;
- Signierung des oder der Hashtrees mittels eines qualifizierten Zeitstempels; durch den der fortgeschrittene Zeitstempel durch einen qualifizierten Zeitstempel bestätigt wird, wodurch in dem vorgewählten Zeitintervall nur ein kostenpflichtiger Zeitstempel erforderlich ist, wobei zur Erzeugung der Signaturen Kryptographiealgorithmen verwendet werden;
- automatische Zuführung der zu archivierenden Daten dem Archiv ohne weitere Benutzeraktion;
durchzuführen.

In einer Ausführungsform der Erfindung ist die Kryptographievorrichtung derart ausgestaltet, dass eine Entschlüsselung der Daten nur auf dem jeweils zur Verschlüsselung benutzten Computersystem möglich ist.

Für die erfindungsgemäße Einbindung des Computersystems in den Datenstrom, die es ermöglicht, die zu archivierenden Daten ohne weitere Benutzeraktion automatisch dem Archiv zuzuführen, gibt es mehrere Möglichkeiten. Die Ausführung der Schnittstellen zu dem Datenstrom hängt im Wesentlichen von der Art der zu archivierenden Daten ab. Für den Fall eines Emailarchivs bestehen unter anderem zwei bevorzugte Ausführungsvarianten. Bei der einen ist das Archivsystem zwischen dem Mailserver (z. B. Sendmail, Microsoft Exchange, Lotus Notes, Novell GroupWise) und dem Internetgateway bzw. einer Firewall installiert und leitet die ein- bzw. ausgehenden Emails weiter, nachdem eine Kopie für das Archiv abgelegt wurde. Bei der anderen Variante wird das Archivsystem vom Mailserver mit einer Kopie der transportierten Emails versorgt. Alternativ bestünde die Möglichkeit, das Ablageverzeichnis des Mailservers für die Emails zu überwachen und von dort Kopien in das Archiv zu übernehmen. Diese Vorgehensweise birgt jedoch die Gefahr, dass bereits nicht mehr originale Emaildaten in diesen Verzeichnissen abgelegt werden.

Für die Archivierung von gedruckten Dokumenten ist ein Druckertreiber eine geeignete Schnittstelle zum Archivsystem. Das Archivsystem stellt einen Treiber zur Verfügung, der vor den eigentlichen Druckertreibern arbeitet. Druckdaten, die an installierte Drucker gesendet werden, werden vom Archivtreiber ins Archiv kopiert und danach an den Treiber des Druckers weitergeleitet. Auf diese Weise werden sämtliche gedruckten Dokumente automatisch auch im Archiv erfasst. Für die Erfassung von Dokumenten in Papierform kann auf eine manuelle Erfassung mittels eines Scanners zurückgegriffen werden. Aber auch hier besteht die Möglichkeit analog zum Druckertreiber einen Treiber vor den Scannertreiber zu setzen, der automatisch alle gescannten Dokumente dem Archiv zuführt.

Sowohl für die gedruckten Dokumente als auch für die gescannten Dokumente erfolgt wiederum nach Umwandlung in Textformat eine Verschlagwortung und durchsuchbare Ablage in einem Datenbanksystem.

In einer weiteren Ausführungsform der Erfindung ist das Computersystem im Fall, dass die zu archivierenden Daten Emails sind, am Emailserver installiert und erhält von diesem Kopien der Emails.

Beansprucht wird weiterhin ein Computerprogramm (Anspruch 16) zur Durchführung des Verfahrens mit Programmcode, der auf einem maschinenlesbaren Träger gespeichert ist, wenn das Programm in einem Computer ausgeführt wird.

## Patentansprüche

1. Verfahren zur Langzeitarchivierung von qualifiziert signierten Daten beinhaltend folgende Verfahrensschritte:
- Hashen der Daten;
- Verschlüsselung der Daten mittels eines Kryptographiealgorithmuses;
- Hashen der verschlüsselten Daten;
- Signieren der gehashten Daten mit einem fortgeschrittenen Zeitstempel am Ende eines vorgewählten Zeitintervalls, wobei die Signatur sowohl einen Hashwert der Daten als auch einen Hashwert der verschlüsselten Daten beinhaltet;
- Erzeugung eines Hashtrees über den gesamten Datenbestand oder Untergruppen davon;
- Signierung des oder der Hashtrees mittels eines qualifizierten Zeitstempels, durch den der fortgeschrittene Zeitstempel durch einen qualifizierten Zeitstempel bestätigt wird, wodurch in dem vorgewählten Zeitintervall nur ein kostenpflichtiger Zeitstempel erforderlich ist, wobei zur Erzeugung der Signaturen Kryptographiealgorithmen verwendet werden;
- automatische Zuführung der zu archivierenden Daten dem Archiv ohne weitere Benutzeraktion.

2. Verfahren nach Anspruch 1, **dadurch gekennzeichnet, dass** zur Aufrechterhaltung der Rechtsgültigkeit der Signatur einer oder mehrerer Dateien eine Neusignierung des oder der Hashtrees durch eine qualifizierte Signatur erfolgt.

3. Verfahren nach den Ansprüchen 1 und 2, **dadurch gekennzeichnet, dass** die Erzeugung des Hashtrees in regelmäßigen zeitlichen Intervallen, insbesondere täglich, über den gesamten Datenbestand erfolgt.

4. Verfahren nach den Ansprüchen 1 und 2, **dadurch gekennzeichnet, dass** die Erzeugung des Hashtrees in regelmäßigen zeitlichen Intervallen, insbesondere täglich, über den neu hinzugekommenen Datenbestand erfolgt.

5. Verfahren nach einem der Ansprüche 1 bis 4, **dadurch gekennzeichnet, dass** die zu archivierenden Daten Emails sind und die fortgeschrittene Signatur jeweils über die gesamte Email erzeugt wird.

6. Verfahren nach einem der Ansprüche 1 bis 4, **dadurch gekennzeichnet, dass** die zu archivierenden Daten Emails sind und die fortgeschrittene Signatur jeweils nur über den Body der Email inklusive etwa vorhandener Anhänge jedoch ohne den Header erzeugt wird.

7. Verfahren nach einem der Ansprüche 1 bis 6, **dadurch gekennzeichnet, dass** die Werte der Hashtrees in einer Binärdatei gesammelt werden.

8. Verfahren nach Anspruch 7, **dadurch gekennzeichnet, dass** der binäre Hashtree zusammen mit dem eingeholten qualifizierten Zeitstempel so im Archiv abgelegt wird wie die zu archivierenden Daten.

9. Verfahren nach einem der Ansprüche 1 bis 6, **dadurch gekennzeichnet, dass** die Werte der Hashtrees in einer Datenbank gesammelt werden.

10. Verfahren nach einem der Ansprüche 1 bis 9, **dadurch gekennzeichnet, dass** die Daten parallel in einem Durchlauf mit mehr als einem Hashalgorithmus gehasht werden und die so erzeugten Hashwerte zusammen mit den gestempelten Daten und einem Verweis auf den zur Stempelung verwendeten Algorithmus abgelegt werden.

11. Verfahren nach einem der Ansprüche 1 bis 10, **dadurch gekennzeichnet, dass** die Anforderung der qualifizierten Zeitstempel für mehrere Archivclients durch einen gemeinsamen Zeitstempelserver derart geschieht, dass die zur Stempelung übergebenen Hashwerte innerhalb eines regelmäßigen Zeitfensters durch den gemeinsamen Zeitstempelserver gesammelt und nach Ende des Zeitfensters verknüpft werden, was vorzugsweise über einen Hashbaum geschieht, danach an einen qualifizierten Zeitstempeldienst zur Stempelung übergeben werden und den Archivclients beim nächsten Kontakt eine Datenstruktur, die mit einem qualifizierten Zeitstempel versehen ist und den übergebenen Hashwert umfasst, zurückgegeben wird.

12. Computersystem zur Langzeitarchivierung von qualifiziert signierten Daten, wobei das Computersystem nachfolgende Merkmale beinhaltet:
- eine und/oder mehrere Schnittstellen zur Verbindung mit je einem Server zur Ausstellung von fortgeschrittenen und/oder qualifizierten Signaturen und Zeitstempeln;
- eine Kryptographievorrichtung;
- ein und/oder mehrere Massenspeichermedien;
- eine und/oder mehrere geeignete Schnittstellen zu dem Datenstrom der zu archivierenden Daten, die derart ausgeführt ist/sind, dass eine automatische Archivierung erfolgen kann;
und eingerichtet ist, die Verfahrensschritte
- Hashen der Daten;
- Verschlüsselung der Daten mittels eines Kryptographiealgorithmuses;
- Hashen der verschlüsselten Daten;
- Signieren der gehashten Daten mit einem fortgeschrittenen Zeitstempel am Ende eines vorgewählten Zeitintervalls, wobei die Signatur sowohl einen Hashwert der Daten als auch einen Hashwert der verschlüsselten Daten beinhaltet;
- Erzeugung eines Hashtrees über den gesamten Datenbestand oder Untergruppen davon;
- Signierung des oder der Hashtrees mittels eines qualifizierten Zeitstempels; durch den der fortgeschrittene Zeitstempel durch einen qualifizierten Zeitstempel bestätigt wird, wodurch in dem vorgewählten Zeitintervall nur ein kostenpflichtiger Zeitstempel erforderlich ist, wobei zur Erzeugung der Signaturen Kryptographiealgorithmen verwendet werden;
- automatische Zuführung der zu archivierenden Daten dem Archiv ohne weitere Benutzeraktion;
durchzuführen.

13. Computersystem nach Anspruch 12, **dadurch gekennzeichnet, dass** die Kryptographievorrichtung derart ausgestaltet ist, dass eine Entschlüsselung der Daten nur auf dem jeweils zur Verschlüsselung benutzten Computersystem möglich ist.

14. Computersystem nach einem der Ansprüche 12 und 13, **dadurch gekennzeichnet, dass** das Computersystem im Fall, dass die zu archivierenden Daten Emails sind, zwischen Emailserver und Internetgateway installiert ist.

15. Computersystem nach einem der Ansprüche 12 und 13, **dadurch gekennzeichnet, dass** das Computersystem im Fall, dass die zu archivierenden Daten Emails sind, am Emailserver installiert ist und von diesem Kopien der Emails erhält.

16. Computerprogramm zur Durchführung des Verfahrens nach einem der Ansprüche 1 bis 11 mit Programmcode, der auf einem maschinenlesbaren Träger gespeichert ist, wenn das Programm in einem Computer ausgeführt wird.

## Claims

1. A method for the long-term archiving of qualified signed data comprising the following method steps:
- Hashing of the data;
- encryption of the data by means of a cryptography algorithm;
- hashing of the encrypted data;
- signing the hashed data with an advanced time stamp at the end of a preselected time interval, wherein the signature includes both a hash value of the original file and a hash value of the encrypted archive file;
- generating a hashtree over the entire dataset or sub-groups thereof;
- signing the hashtree(s) by means of a qualified timestamp by which the advanced timestamp is confirmed by a qualified timestamp, whereby only a paid timestamp is required in the preselected time interval, wherein cryptographic algorithms are used to generate the signatures;
- automatic feeding of the data to be archived to the archive without further user action;
said method being performed on a computer system including the following features:
- one and/or more interfaces each for connection to a server for issuing advanced and/or qualified signatures and timestamps;
- a cryptographic device;
- one and/or more mass storage media;
- one and/or more suitable interfaces to the data stream of the data to be archived, which are designed in such a way that automatic archiving can take place.

2. The method according to claim 1, **characterized in that**, in order to maintain the legal validity of the signature of one or more files, the hashtree or hashtrees is or are resigned by a qualified signature.

3. The method according to claims 1 and 2, **characterized in that** the hashtree is generated at regular intervals, in particular daily, over the entire database.

4. The method according to claims 1 and 2, **characterized in that** the hashtree is generated at regular intervals, in particular daily, via the newly added data stock.

5. The method according to one of the claims 1 to 4, **characterized in that** the data to be archived are emails and the advanced signature is always generated over the entire email.

6. The method according to one of the claims 1 to 4, **characterized in that** the data to be archived are emails and the advanced signature is generated each time only via the body of the email including any existing attachments but without the header.

7. The method according to one of the claims 1 to 6, **characterized in that** the values of the hashtrees are collected in a binary file.

8. The method according to claim 7, **characterized in that** the binary hashtree together with the obtained qualified time stamp is stored in the archive in the same way as the data to be archived.

9. The method according to one of claims 1 to 6, **characterized in that** the values of the hashtrees are collected in a database.

10. The method according to one of claims 1 to 9, **characterized in that** the data are hashed in parallel in a run with more than one hashing algorithm and the hash values thus generated are stored together with the stamped data and a reference to the algorithm used for stamping.

11. The method according to one of claims 1 to 10, **characterized in that** the request for the qualified time stamps for a plurality of archive clients is made by a common time stamp server in such a way that the hash values transferred for stamping are collected by the common time stamp server within a regular time window and are linked after the end of the time window, preferably via a hash tree, then passed to a qualified timestamp service for stamping, and returned to the archive clients at the next contact a data structure provided with a qualified timestamp and comprising the passed hash value.

12. Computer system for the long-term archiving of qualified signed data, **characterized in that** the computer system contains the following features:
- one and/or more interfaces for connection to one server each for issuing advanced and/or qualified signatures and time stamps;
- a cryptographic device;
- one and/or more mass storage media;
- one and/or more suitable interfaces to the data stream of the data to be archived, which are designed in such a way that automatic archiving can take place;
and is set up to carry out the method steps:
- Hashing the data;
- Encryption of the data by means of a cryptography algorithm;
- Hashing of encrypted data;
- Signing the hashed data with an advanced time stamp at the end of a preselected time interval, the signature including both a hash value of the original file and a hash value of the encrypted archive file;
- Generation of a hashtree over the entire dataset or sub-groups thereof;
- Signing the hashtree(s) by means of a qualified timestamp; by which the advanced timestamp is confirmed by a qualified timestamp, whereby only a paid timestamp is required in the preselected time interval, cryptographic algorithms being used to generate the signatures;
- Automatic feeding of the data to be archived to the archive without further user action.

13. The computer system according to claim 12, **characterized in that** the cryptographic device is designed in such a way that decryption of the data is only possible on the computer system respectively used for the encryption.

14. The computer system according to one of claims 12 and 13, **characterized in that**, in the case that the data to be archived are emails, the computer system is installed between the email server and the Internet gateway.

15. The computer system according to any of claims 12 and 13, **characterized in that**, in the case that the data to be archived are emails, the computer system is installed on the email server and receives copies of the emails from it.

16. A computer program for performing the procedure under any of Claims 1 to 11 with program code stored on a machine-readable medium if the program is executed in a computer.

## Revendications

1. Un procédé pour l'archivage à long terme de données signées qualifiées, comprenant les étapes procédurales suivantes:
- Hacher les données ;
- Cryptage des données au moyen d'un algorithme de cryptographie ;
- Hacher les données cryptées ;
- Signer les données hachées avec un horodatage avancé à la fin d'un intervalle de temps présélectionné, où la signature comprend à la fois une valeur de hachage du fichier original et une valeur de hachage du fichier archive crypté ;
- Création d'un hashtree sur l'ensemble ou des sous-groupes de l'ensemble des données ;
- Signature du ou des hashtree(s) au moyen d'un horodatage qualifié par lequel l'horodatage avancé est confirmé par un horodatage qualifié, seul un horodatage payant étant requis dans l'intervalle de temps présélectionné, des algorithmes de cryptographie étant utilisés pour générer les signatures ;
- Alimentation automatique des données à archiver dans l'archive sans autre intervention de l'utilisateur ;
la méthode exécutée sur un système informatique comprenant les caractéristiques suivantes :
- une et/ou plusieurs interfaces pour se connecter à un serveur pour l'émission de signatures et d'horodatages avancés et/ou qualifiés ;
- un dispositif cryptographique ;
- un et/ou plusieurs supports de stockage de masse ;
- Une ou plusieurs interfaces appropriées au flux de données des données à archiver, conçues de telle sorte que l'archivage automatique puisse avoir lieu.

2. Le procédé selon la revendication 1, **caractérisée par le fait que** pour maintenir la validité juridique de la signature d'un ou plusieurs fichiers, le(s) hashtree(s) est (sont) re-signé(s) avec une signature qualifiée.

3. Le procédé selon les revendications 1 et 2, **caractérisée par le fait que** le Hashtree est généré à intervalles réguliers, en particulier quotidiennement, sur toute la base de données.

4. Le procédé selon les revendications 1 et 2, **caractérisée par le fait que** le Hashtree est généré à intervalles réguliers, en particulier quotidiennement, via la base de données nouvellement ajoutée.

5. Le procédé selon l'une des revendications 1 à 4, **caractérisée par le fait que** les données à archiver sont des e-mails et que la signature avancée est générée sur l'ensemble du message.

6. Le procédé selon l'une des revendications 1 à 4, **caractérisée par le fait que** les données à archiver sont des emails et que la signature avancée n'est générée que via le corps de l'email incluant les pièces jointes existantes mais sans en-tête.

7. Le procédé selon l'une quelconque des revendications 1 à 6, **caractérisée en ce que** les valeurs des hashtrees sont collectées dans un fichier binaire.

8. Le procédé selon la revendication 7, **caractérisée en ce que** l'hachetree binaire ainsi que l'horodatage qualifié obtenu sont stockés dans les archives de la même manière que les données à archiver.

9. Le procédé selon l'une quelconque des revendications 1 à 6, **caractérisée en ce que** les valeurs des hashtrees sont collectées dans une base de données.

10. Le procédé selon l'une quelconque des revendications 1 à 9, **caractérisé en ce que** les données sont hachées en parallèle dans un cycle avec plus d'un algorithme de hachage et les valeurs de hachage ainsi générées sont stockées avec les données estampées et une référence à l'algorithme utilisé pour le poinçonnage.

11. Le procédé selon l'une des revendications 1 à 10, **caractérisé en ce que** la demande d'horodatage qualifié pour une pluralité de clients d'archives est effectuée par un serveur d'horodatage commun de telle sorte que les valeurs de hachage transférées pour l'horodatage sont collectées par le serveur d'horodatage commun dans une fenêtre horaire régulière et sont reliées après la fin de la fenêtre horaire, de préférence via un arbre à hash, puis transmises pour estampage à un service d'horodatage qualifié et que la structure des données munie d'horodatage qualifié et comportant la valeur de hash transférée soit rendue au prochain client d'archives par un contact.

12. Un système informatique pour l'archivage à long terme de données signées qualifiées, **caractérisé en ce que** le système informatique contient les caractéristiques suivantes :
- une et/ou plusieurs interfaces pour se connecter à un serveur pour l'émission de signatures et d'horodatages avancés et/ou qualifiés ;
- un dispositif cryptographique ;
- un et/ou plusieurs supports de stockage de masse ;
- une et/ou plusieurs interfaces appropriées au flux de données des données à archiver, qui sont conçues de manière à permettre l'archivage automatique ;
et qui a été mis en place, les étapes de la procédé
- Hacher les données ;
- Cryptage des données au moyen d'un algorithme de cryptographie ;
- Hacher les données cryptées ;
- Signer les données hachées avec un horodatage avancé à la fin d'un intervalle de temps présélectionné, où la signature comprend à la fois une valeur de hachage du fichier original et une valeur de hachage du fichier archive crypté ;
- Création d'un hashtree sur l'ensemble ou des sous-groupes de l'ensemble des données ;
- signer le(s) hashtree(s) au moyen d'un horodatage qualifié; par lequel l'horodatage avancé est confirmé par un horodatage qualifié, de sorte que dans l'intervalle de temps présélectionné seul un horodatage payant est requis, des algorithmes de cryptographie étant utilisés pour générer les signatures ;
- Alimentation automatique des données à archiver dans l'archive sans autre intervention de l'utilisateur ;
à exécuter.

13. Le système informatique selon la revendication 12, **caractérisé en ce que** le dispositif cryptographique est conçu de telle sorte que le décryptage des données n'est possible que sur le système informatique utilisé pour le cryptage dans chaque cas.

14. Le système informatique selon l'une quelconque des revendications 12 et 13, **caractérisé en ce que**, dans le cas où les données à archiver sont des e-mails, le système informatique est installé entre le serveur de messagerie et la passerelle Internet.

15. Le système informatique selon l'une quelconque des revendications 12 et 13, **caractérisé en ce que**, dans le cas où les données à archiver sont des courriers électroniques, le système informatique est installé sur le serveur de courrier électronique et reçoit des copies des courriers électroniques de celui-ci.

16. Un programme d'ordinateur pour exécuter la procédé en vertu de l'une des revendications 1 à 11, le code de programme étant stocké sur un support lisible par machine lorsque le programme est exécuté sur un ordinateur.
